(19) Europäisches Patentamt
European Patent Office
Office européen des brevets

(11) **EP 0 987 831 B1**

(12) **EUROPEAN PATENT SPECIFICATION**

(45) Date of publication and mention
of the grant of the patent:
**22.03.2006 Bulletin 2006/12**

(51) Int Cl.:
*H04B 7/005* (2006.01)    *H04L 27/26* (2006.01)

(21) Application number: **98402253.3**

(22) Date of filing: **11.09.1998**

(54) **Method and apparatus for channel estimation and equalisation in an OFDM radio receiver**

Verfahren und Einrichtung zur Kanalschätzung und Kanalentzerrung in einem OFDM-Empfänger

Procédé et appareil d'estimation et d'égalisation d'un canal dans un récepteur pour MDFO

(84) Designated Contracting States:
**DE ES FR GB IT NL**

(43) Date of publication of application:
**22.03.2000 Bulletin 2000/12**

(73) Proprietor: **MOTOROLA, INC.**
**Schaumburg, IL 60196 (US)**

(72) Inventors:
• **Muquet, Bertrand**
**75014 Paris (FR)**
• **De Courville, Marc**
**75014 Paris (FR)**

(74) Representative: **Cross, Rupert Edward Blount et al**
**BOULT WADE TENNANT,**
**Verulam Gardens**
**70 Gray's Inn Road**
**London WC1X 8BT (GB)**

(56) References cited:
**EP-A- 0 825 742**    **EP-A- 0 859 494**
**FR-A- 2 748 587**    **US-A- 5 559 833**

• **U. TURELI, H. LIU: "Blind Carrier Synchronization and Channel Identification for OFDM Communications" PROCEEDINGS OF THE 1998 IEEE INTERNATIONAL CONFERENCE ON ACOUSTICS, SPEECH AND SIGNAL PROCESSING, vol. 6, 12 - 15 May 1998, pages 3509-3512, XP002092515 Seatle, WA, USA**

EP 0 987 831 B1

**Description**

Field of the invention

The present invention relates to a method and apparatus for channel estimation and equalisation in a receiver and in particular to a method and apparatus for channel estimation and equalisation in a receiver operating within an Orthogonal Frequency Division Multiplexing (OFDM), or multicarrier, modulation scheme with a guard interval.

Background of the invention

Conventionally within an OFDM modulation scheme, channel estimation is performed by comparing a received reference symbol or group of symbols or pilot tone with a locally stored version of the reference or pilot tone. From this comparison correction coefficients $C_0,..., C_N$ are generated which are stored in memory and used on successive groups of received data until a new reference or pilot tone is received.

This method of channel estimation is successful where the channel is relatively unnoisy and does not vary quickly in time. However, where the channel is noisy, the accuracy of the channel estimation will be low and where the channel varies relatively quickly compared to the rate with which pilot tones are transmitted (i.e. how often pilot tones are transmitted rather than block symbols carrying data), either the rate of the transmission of pilot tones must be increased or the channel estimation will become unreliable towards the end of each frame (assuming pilot tones are transmitted at the beginning or end of each frame).

'Blind Carrier Synchronization and Channel Identification for OFDM Communications', Proceedings of the 1998 IEEE International Conference On Acoustics, Speech and Signal Processing, Vol. 6, 12-15 May 1998, pages 3509-3512 describes a blind carrier estimation algorithm and equalizer that exploits the intrinsic structure information of an OFDM signal.

EP 0859494 describes an OFDM transmission system in which reference symbols are generated that are indicative of phase information and inserted at a predetermined number of symbols where the OFDM signal is demodulated based on the inserted symbols.

US 559833 describes an OFDM transmission system in which symbol blocks are delayed and the delayed symbol blocks are subtracted from a symbol block to generate a difference signal, which is used to control a loop.

Summary of the Invention

The present invention provides a method of and apparatus for channel estimation and equalisation in an OFDM modulation scheme as described in the accompanying claims.

The term redundant prefix is used in the context of the present invention to refer to any data which is transmitted as part of a block symbol of data to be transmitted and is redundant in the sense that it does not include any information which cannot be derived from the rest of the block symbol. As will be appreciated by a person skilled in the art, OFDM schemes typically introduce a redundant prefix (which is simply formed from a number of the symbols to be transmitted as part of the block symbol) in order to form a guard interval (such symbols are thus transmitted twice - once in the guard interval and once again in the main body of the block symbol). The guard interval enables a simple equalisation method to be employed (which will be further described below) which takes account of inter-symbol interference even for those symbols transmitted at the beginning of a block-symbol. For this approach to work the guard interval created by the redundant prefix must be at least as long as the maximum interval between interfering symbols created by the channel (i.e. the channel memory).

According to one preferred embodiment, channel detection is performed in a completely blind manner solely by means of detecting and processing the redundant prefix such that it is not necessary to detect and process the special pilot tone. This has the advantage of allowing a greater rate of data to be transmitted because the pilot tones can be replaced by block symbols containing data.

According to an alternative preferred embodiment channel detection is performed in a semi-blind manner both by detecting and processing, each redundant prefix which is received, and by detecting and processing the pilot tones. In other words, the channel estimation performed by processing the redundant prefix in accordance with the present invention may be coupled with the convention method of performing channel estimation (by means of processing special pilot tones) to improve the estimation of the channel and thus the whole performance of the system (e.g. giving rise to an improved Bit Error Rate (BER). This has the advantage of providing better channel detection than can be achieved using pilot tones alone and is particularly advantageous where the channel is noisy or relatively quickly varying as for example occurs in a Wireless Local Area Network (WLAN) arrangement where the action of people walking about in the relevant local area (e.g. an office) causes a relatively quickly varying channel.

in one preferred embodiment, the processing step includes the step of calculating some of the elements of a correlation matrix of the received block-symbols including the redundant prefix. In one preferred embodiment the elements are from an auto-correlation matrix of the received bloc-symbol (this has the advantage of enabling information about the channel to be identified as soon as the first block symbol has been received). In an alternative embodiment, the elements are from an inter-correlation matrix formed from two different received block-symbols, ideally being adjacent block symbols.

In one embodiment, only the elements of a portion of a single column of the correlation matrix are calculated. This enables the channel to be estimated with a minimum amount of processing required. In an alternative embodiment, the elements of a sub-matrix of the correlation matrix are calculated. This enables a better channel estimation to be performed through it requires greater processing.

Brief Description of the Drawings

In order that the present invention may be better understood, embodiments thereof will now be described by way of example only and with reference to the accompanying drawings in which:-

Figure 1 is a block diagram of a conventional OFDM transmission system; and

Figure 2 is a block diagram of an OFDM transmission system in accordance with the present invention.

Detailed Description of the Invention

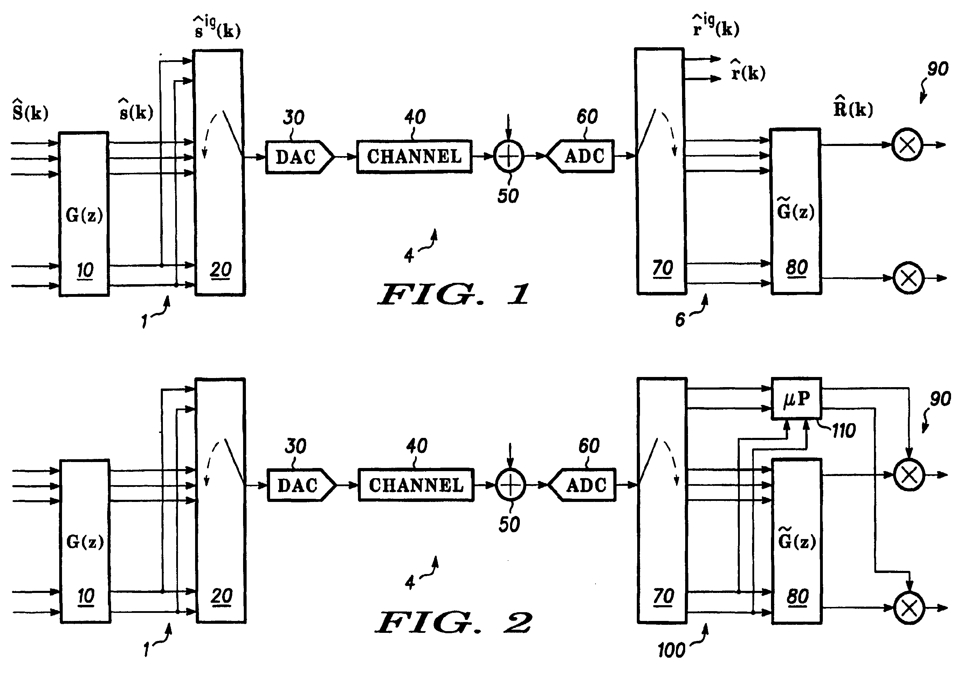

The Conventional OFDM transmission system of Figure 1 shows a modulator arrangement 1, a channel 4, and a demodulator arrangement 6. The modulator arrangement 1 comprises a modulation filter 10, a parallel-to-serial converter 20 and a digital to analogue converter 30. The channel 4 is represented by a a noiseless signal distortion means 40 together with an adder 50 where noise is added to the distorted signal. The demodulator arrangement 6 comprises an analogue to digital converter 60, a serial to parallel converter 70, a demodulation filter 80 and a column of equalisation multipliers 90.

The OFDM transmission system of Figure 2 is similar in many respects to the conventional system of Figure 1 and like reference numerals have been used to describe corresponding elements. In fact, the modulation arrangement 1 and channel 4 of Figure 2 are the same as those of Figure1. The only difference between the demodulation arrangement 100 of Figure 2 and the demodulation arrangement 6 of Figure 1 is that the demodulation arrangement 100 has an additional processing means 110 which will be described at greater length below.

The operation of the OFDM transmission systems of Figures 1 and 2 will now be described. A block symbol of data $S(k)$ to be transmitted is applied to the modulation filter 10 which outputs a filtered block symbol signal $s(k)$. The unfiltered signal $S(k)$ can be treated mathematically as a vector of order N (i.e. comprising N elements) each element $s_0(k), s_1(k), ..., s_{N-1}(k)$ representing a symbol to be transmitted. The filter 10 can be represented by a square matrix $G(z)$ of order NxN which operates on the input vector $S(k)$ to form the filtered block symbol signal $s(lc)$ as the output vector. This is represented mathematically by:-

$$s(k) = G(z)S(k)$$

From the signal $s(k)$ an expanded filtered block symbol signal $s^{ig}(k)$ is formed by duplicating the final D elements $s_{N-1-D}, s_{N-1-(D-1)}, ..., s_{N-1}$. The expanded block symbol thus includes a redundant prefix $s_D, s_1, ..., s_D$ and has P elements where $P=N+D$. The redundant cyclic prefix acts as a guard interval as is well known in the art of OFDM modulation schemes.

Signal $s^{ig}(k)$ is input to the parallel to serial converter 20 where it is converted into a serial symbol stream and then serially passed through the Digital-to-Analogue Converter (DAC) 30 and then through the channel 4. The effect of passing the signal through the channel 4 is equivalent to passing it through the noiseless distortion means 40 which can be represented mathematically as a $P \times P$ matrix $C(z)$ and then adding a noise signal $b(z)$ via the adder 50 to the resulting vector. After conversion of this signal from analogue to digital by the Analogue-to-Digital Converter (ADC) 60 and serial to parallel conversion by the serial to parallel converter 70, a received signal $r^{ig}(k)$ is generated. The above processes can be represented mathematically by:-

$$r^{ig}(k) = C(z)s^{ig}(k) + b(z)$$

From the initially received signal $r^{ig}(k)$ (which is a vector of order P) a compressed received signal r(k) of order N is formed by simply ignoring the the first D elements of the received signal which correspond to the redundant cyclic prefix. The compressed received signal r(k) is then passed through the demodulation filter 80 to form a filtered received signal R(k). The filter 80 corresponds to an N×N square matrix G'(z), where G(z)G'(z) = $I_{N×N}$ (the identity matrix). The filtered received signal R(k) can then be equalised in a very straightforward manner by multiplying the elements $R_0(k)$, $R_1(k)$, ..., $R_{N-1}(k)$ by suitable equalisation co-efficients $C_0$, $C_1$,..., $C_N$ at the multipliers 90 to recover the wanted signal S (k). The equalisation co-efficients must essentially compensate for the adverse effects of the channel (i.e. distortion, such as intersymbol interference, and noise).

(Note that the modulation 10 and demodulation 80 filters must correspond to lossiess orthogonal matrices such that they have the property of perfect reconstruction. One conventional such pair of matrices are formed by a Digital Fourier Transform (DFT) pair in which the moduation matrix 10 is an inverse DFT and the demodulation matrix 80 is a forwards DFT. Such modulators are used for example in the Digital Audio Band (DAB) standard. However, a more general pair of filters may be used (which need not be scalar) which can model modulators of length larger than the number of subbands so as to enable more selective filters. Such modulators are used for example in the ADSL standard)

Conventionally, the equalisation co-efficients are generated in a well known manner by means of a pilot tone which is known to a receiver being sent by the modulator arrangement. The demodulator arrangement then compares the received signal R(k) with the originally sent signal to establish to establish what the correct equalisation co-efficients should be. This process is well known in the art and will not therefore be described here in greater detail, except to note that the received redundant prefix $r^{ig}_0(k)$, $r^{ig}_1(k)$, ...., $r^{ig}_{D-1}(k)$ is not used at all In this process of establishing the equalisation co-efficients. Fcr this reason the received redundant prefix is shown in Figure 1 as simply being ignored or trashed after they have been generated by the serial to parallel converter.

By contrast, in the demodulator arrangement 100 according to an embodiment of the present invention, the redundant prefix $r^{ig}_0(k)$, $r^{ig}_1(k)$, ...., $r^{ig}_{D-1}(k)$ is fed to a processing means 110. The processing means is conveniently provided by a suitable Digital Signal Processor (DSP) such as is commonly found in a digital communication device. Additionally, the processing means 110 also receives the final D elements $r^{ig}_{N-1-D}(k)$, $r^{ig}_{N-1-(D-1)}(k)$, ...., $r^{ig}_{N-1}(k)$ of the received signal $r^{ig}(k)$. From these elements, the processing means is able to obtain information about the channel which enables the equalisation co-efficients to be estimated and iteratively improved upon or refined with each additional block symbol received by the demodulation arrangement 100. The refined equalisation co-efficients are stored in a memory which is constantly refreshed with each newly generated set of refined equalisation co-efficients. The thus refined coefficients are then applied to the multipliers 90 as in the conventional case.

It will be clear to a person skilled in the art that a number of different methods of processing the elements fed to the processing means 110 will be possible in order to obtain information about the channel to enhance the equalisation of the filtered received signal R(k). Such methods will however generally all be based on the observation that a correlation matrix formed from the received signal $r^{ig}(k)$ (either an auto-correlation matrix formed from a single such signal or an inter-correlation matrix formed from two different received signals, preferably adjacent ones) contains in a sub-matrix portion thereof information about the distortion created by the channel.

A justification for this observation can be given mathematically as follows below in square brackets:-

[The key parameters of the system are :

$N$    number of carrier
$D$    length of the cyclic prefix
$P$    total number of symbol to transmit

$(P = N + D)$

and the signals appearing in the scheme are defined by :

$$S(k) := (S_0(k), \ldots, S_{N-1}(k))^T$$
$$s(k) := (s_0(k), \ldots, s_{N-1}(k))^T$$
$$s^{is}(k) := (s_0^{is}(k), \ldots, s_{P-1}^{is}(k))^T$$
$$v(k) := (v_0(k), \ldots, v_{P-1}(k))^T$$
$$r^{is}(k) := (r_0^{is}(k), \ldots, r_{P-1}^{is}(k))^T$$

where

for $0 \le n \le N-1$, $\begin{cases} S_n(k) = S(n+kN) \\ s_n(k) = s(n+kN) \end{cases}$

for $0 \le p \le P-1$, $\begin{cases} s_p^{is}(k) = s^{is}(p+kP) \\ v_p(k) = v(p+kP) \\ r_p^{is}(k) = r^{is}(p+kP) \end{cases}$

The method relies on the redundancy introduced at the emitter by the adjunction of the guard interval of length $D$ and on the perfect reconstruction property of lossless filterbanks $G(z)\tilde{G}(z)=I_{N\times N}$ where $\tilde{G}(z)=G(z^{-1})^H$

The relation between the blocks at the input and the output of the channel can be expressed as :

$$r^{is}(z)=C(z)s^{is}(z)+b(z)$$

where the matrix $C(z)$ is given by :

$$C(z)=\begin{bmatrix} c_0 & c_{P-1}z^{-1} & \cdots & c_2z^{-1} & c_1z^{-1} \\ c_1 & c_0 & \ddots & & c_2z^{-1} \\ \vdots & \ddots & \ddots & \ddots & \vdots \\ \vdots & & \ddots & \ddots & c_{P-1}z^{-1} \\ c_{P-1} & c_{P-2} & \cdots & c_1 & c_0 \end{bmatrix}_{P\times P}$$

where $(c_0,...,c_{P-1})=(c_0,...,c_L,0,...,0)$ is the channel time response and where $b(z)$ is the z-transform of the noise due to $b_n$ at the output of the serial to parallel converter.

It can be shown that the relation between the input block $S(z)$ and the block at the output of the channel $r^{is}(z)$ can be expressed as :

$$r^{is}(z)=C(z)H(z)S(z)+b(z)$$

where $H(z)$ is defined by $H(z)=\left[G^{is}(z)^T,G(z)^T\right]$ where the $D\times N$ matrix $G^{is}(z)$ denotes the last $D$ rows of $G(z)$

The auto-correlation matrix $R:=E\left[r^{is}(k)r^{is}(k)^H\right]$ of the block received signal $r^{is}(k)$ can be estimated by an iterative process and leads to a channel coefficient time response estimation by use of the perfect

reconstruction property $G(z)\tilde{G}(z)=I_{N\times N}$. The estimation can be obtained using two methods with different convergence rates and arithmetical costs.

## First method

If the noise $b(k)$ is white, the first column of $R$ is equal to :

$$c_0^*(c_0,...,c_L) = \frac{1}{\sigma_s^2}(R_{N+1,1},...,R_{N+L,1})$$

Notice that this result only holds if the length of the cyclic prefix is greater than the channel order $(L<D)$ which is always the case in practice.

Thus the channel time response can be calculated up to a phase scalar factor which is by the way always the case for blind channel identification. However this factor is not a problem since it can be easily deduced by observing the received constellation shape combined to differential coding in the emitter.

Note that the evaluation of the inter-correlation matrix $R':=E\left[r^{is}(k-1)r^{is}(k)^H\right]$ of the block received signal also leads to the channel coefficient time response. Indeed if the noise is white, the Lth column of $R'$ is equal to :

$$c_L^*(c_0,...,c_L) = \frac{1}{\sigma_s^2}(R'_{L+1,L},...,R'_{2L+1,L})$$

## Second method

This method is more sophisticated and has a greater arithmetical cost but shows a faster convergence rate. It is possible to chose one or the other among the both methods depending on the application.

If the noise $b(k)$ is white, the LU matrix decomposition of the $(L+1)\times(L+1)$ square submatrix $\tilde{R}$ defined by :

$$\tilde{R}_{i,j} = R_{i+N,j} \quad \text{for} \quad 1 \le i, j \le L+1$$

can lead to a more accurate channel estimation under the assumption that $2L < N$ (which is always the case in standardized systems).

Indeed $\tilde{R}$ can be written as : $\tilde{R} = L_R U_R$ where $L_R$ is a square lower triangular matrix with the same element $L_{i,i} = L_{1,1}$ on its diagonal and is $U_R$ a square upper triangular matrix with $L_{1,1}^*$ on its diagonal. As this decomposition is unique, the two matrices are obviously equal to :

$$L_R = \tilde{H}_0 \qquad (3)$$

$$U_R = \tilde{H}_0^H \qquad (4)$$

where $\tilde{H}_0$ is the following matrix providing the channels coefficients :

$$\tilde{H}_0 = \begin{bmatrix} c_0 & 0 & \cdots & 0 \\ \vdots & \ddots & \ddots & \vdots \\ \vdots & & \ddots & 0 \\ c_L & \cdots & \cdots & c_0 \end{bmatrix}$$

Since the matrix $\tilde{R}$ is only estimated and is not exactly calculated, one of the linear system described by (3) or by (4) or by (3)+(4) has to be solved in the mean square sense in order to estimate the channel. This enables a more precise estimation of the channel than the previous described method and speeds up the convergence rate.

Finally, note that it is possible to use more elements of the auto-correlation matrix $R$ in the same spirit as the two previous methods or to take advantage of the hermitian symmetry of $R$ ($R = R^H$) to improve the estimation accuracy.

The channel identification procedures are summarized below.

**First method**

1. evaluation of the interesting elements $(R_{N+1,1}, \ldots, R_{N+1+L,1})$ of the received signal auto-correlation matrix $R := E[r^{is}(k) r^{is}(k)^H]$. This estimation can possibly be improved by using the pilots symbols and is denoted $\hat{R}$ in the following.

2. normalization of the auto-correlation evaluation for an input of variance $\sigma_S^2 \neq 1$ (the input signal variance is always known) :

$$(\hat{T}_{N+1,1},\ldots,\hat{T}_{N+1+L,1}) = \frac{1}{\sigma_S^2}(\hat{R}_{N+1,1},\ldots,\hat{R}_{N+1+L,1})$$

3. computation of the first channel coefficient estimation :

$$\hat{c}_0 = \sqrt{\hat{T}_{N+1,1}}$$

4. computation of the others channel coefficient estimations :

$$\hat{c}_i = \frac{1}{\hat{c}_0}\hat{T}_{N+1+i,1} \quad \text{for } 1 \leq i \leq l.$$

5. To obtain the refined equalisation coefficients $C_0$, $C_1$, ..., $C_N$ from the channel co-efficients $^\wedge c_0$, $^\wedge c_1$, ..., $^\wedge c_{D-1}$ it is necessary to transform the coefficients according to the same transformation as that provided by G'(z) on the compressed received signal r(k), and then to invert these transformed coefficients.

**Second method**

1. evaluation of the interesting submatrix $\tilde{R}$ of the received signal auto-correlation matrix $R$ where $\tilde{R}$ is defined as :

$$\tilde{R}_{i,j} = R_{i+N,j} \quad \text{for } 1 \leq i,j \leq L+1$$

This evaluation can possibly be improved by use of pilots symbols (i.e. according to a semi-blind method as described below) and is denoted $\hat{R}$ in the following.

2. decomposition by any algorithm (Gauss, Cholesky, ...) of $\hat{R}$ into a product of a lower triangular matrix $L_R$ and of an upper-triangular matrix $U_R$ with the elements $U_{i,i} = L_{i,i}^*$ (for $1 \leq i \leq L+1$) on its diagonal :

$$\hat{R} = L_R U_R$$

3. resolution of the following system of equations :

$$\hat{H}_0 = L_R$$

i.e. determination of the channel coefficient by solving :

$$(\hat{c}_0, \ldots, \hat{c}_L) = \underset{(c_0, \ldots, c_L)}{\text{argmin}} \left\| H_0(c_0, \cdots, c_L) - L_R \right\|$$

where $\| \, \|$ denotes any matrix norm.]

From the above it can be seen that one way of obtaining the necessary information to derive the refined equalisation co-efficients is by simply generating the final D elements of the first column of the correlation matrix. This can easily be done by the processing means 110 forming the complex conjugate of the first element of a received signal $r^{ig}_0(k)$ and consecutively multiplying this by the final D elements of either the same received signal or another one to obtain the time domain channel coefficients from which the refined equalisation co-efficients may be derived in a known manner.

Alternatively, a more complicated method may be used to better exploit the information contained in the correlation matrix by generating the elements of the entire bottom left DxD sub-matrix of the correlation matrix. This can be done by the processing means 110 performing the same operation as above and then repeating the process with consecutive values of $r^{ig}(k)$ (i.e. take the complex conjugate of $r^{ig}_1$ and repeat the process, then agian with the complex conjugate of $r^{ig}_2$, etc.) until the process has been repeated D times in total so that all DxD elements of the interesting sub-matrix are thus formed.

It will be noted that all of the above described methods assume that the noise added by the channel is white (i.e. has the same magnitude for all frequencies). This is a reasonable assumption for most applications.

Furthermore, if the noise is not quite white the above methods will still apply with just a slight reduction in accuracy as a result.

It will be apparent to a person skilled in the art that the enhanced channel identification provided by the present invention can be applied in a number of different ways. For example the method may be used to enable completely blind channel estimation. In this case there is no requirement for the demodulator arrangement 100 to know how the pilot tones are made up, nor is there any requirement, for the modulator arrangement 1 to send pilot tones. This clearly enables a greater data rate to be achieved than with a conventional system in which pilot tones must be regularly transmitted. Alternatively, the method may be used to enable semi-blind channel estimation. In this case channel estimation is performed using the pilot tones and then refined according to the invention with each received signal. This greatly improves the channel estimation and hence equalisation in circumstances where the channel is noisy or relatively quickly varying.

## Claims

1. A method of channel estimation and equalisation for use in an OFDM modulation scheme in which a received block symbol incorporates a redundant prefix in addition to useful data to be sent, the method including,
   at the transmission side (1) the redundant prefix comprising D elements is sent in addition to the useful data block; and
   at the receiver side (100), a received vector, comprising both said redundant prefix and said useful data block is detected and stored
   the method **characterised by**;
   calculating a plurality of elements of a correlation matrix R of the received vector; and
   estimating the time domain channel coefficients by either one of:

i. normalising at least one column of correlation matrix R; or
ii. performing an LU-decomposition of a submatrix of R. into the product of a lower L and upper U triangular matrix where each individual triangular matrix has the same elements on each of its diagonals; and minimising a distance metric between at least one of L or U and a triangular matrix derived from a vector of the channel coefficients.

2. A method as claimed in claim 1 wherein the redundant prefix comprises a duplication of the D elements of the useful data block adjacent the redundant prefix.

3. A method as claimed in claim 2 wherein;
in the case of duplication of the final D elements of the useful data block, the calculated plurality of elements of correlation matrix R comprises only the final D elements of the first column of the correlation matrix R, or, in the case of duplication of the first D elements of the useful data block, the calculated plurality of elements of correlation matrix R comprises only the first D elements of the last column of the correlation matrix R.

4. A method as claimed in claim 2 wherein;
in the case of duplication of the final D elements of the useful data block, the calculated plurality of elements of correlation matrix R comprise only the bottom left DxD submatrix of the correlation matrix R, or, in the case of duplication of the first D elements of the useful data block, the calculated plurality of elements of correlation matrix R comprise only the top right DxD submatrix of the correlation matrix R.

5. A method as claimed in any one of claims 1 to 4 wherein the channel estimation is performed in a completely blind manner without relying on the processing of pilot tones.

6. A method as claimed in any one of claims 1 to 4 wherein the channel estimation is performed in a semi-blind manner by additionally using pilot tones to perform channel estimation.

7. Apparatus for estimating a channel and performing equalisation in an OFDM modulation scheme in which a received block symbol incorporates a redundant prefix in addition to useful data to be sent, the apparatus comprising;
detection means and storage means for detecting and storing a received vector comprising both redundant prefix and useful data;
and **characterised by**;
calculation means (110) for calculating a plurality of elements of a correlation matrix R of the received vector; and estimating means (110) for estimating the time domain channel coefficients by either one of:

i. normalising at least one column of correlation matrix R; and
ii. performing an LU-decomposition of a submatrix of R into the product of a lower L and upper U triangular matrix where each individual triangular matrix has the same elements on each of its diagonals, and minimising a distance metric between at least one of L or U and a triangular matrix derived from a vector of the channel coefficients.

8. Apparatus as claimed in claim 7 wherein the calculation means (110) is adapted to receive both the redundant prefix and the portion of the received block symbol that corresponds to the redundant prefix.

9. A receiver incorporating apparatus as claimed in either one of claims 7 or 8.


**Revendications**

1. Procédé d'estimation et d'égalisation de canal destiné à être utilisé dans un processus de modulation OFDM dans lequel un bloc de symboles reçu contient un préfixe redondant en plus des données utiles à envoyer, le procédé comprenant les étapes dans lesquelles :

du côté transmission (1), le préfixe redondant comprenant D éléments est envoyé en plus du bloc de données utiles ; et
du côté récepteur (100), est détecté et stocké un vecteur reçu comprenant ledit préfixe redondant ainsi que ledit bloc de données utiles ;
le procédé étant **caractérisé par** les étapes qui consistent à :

calculer une pluralité d'éléments d'une matrice de corrélation R du vecteur reçu ; et

estimer les coefficients du canal dans le domaine temporel par l'une ou l'autre des opérations consistant à :

    i. normaliser au moins une colonne de la matrice de corrélation R ; ou

    ii. exécuter une décomposition LU d'une sous-matrice de R en le produit d'une matrice triangulaire inférieure L et d'une matrice triangulaire supérieure U, où chaque matrice triangulaire individuelle a les mêmes éléments sur chacune de ses diagonales ; et

    minimiser une mesure de distance entre au moins l'une des matrices L ou U et une matrice triangulaire obtenue à partir d'un vecteur des coefficients du canal.

2.   Procédé selon la revendication 1, dans lequel le préfixe redondant comprend une duplication des D éléments du bloc de données utiles contigu au préfixe redondant.

3.   Procédé selon la revendication 2, dans lequel :

    en cas de duplication des D derniers éléments du bloc de données utiles, la pluralité d'éléments calculée pour la matrice de corrélation R constitue uniquement les D derniers éléments de la première colonne de la matrice de corrélation R, ou

    en cas de duplication des D premiers éléments du bloc de données utiles, la pluralité d'éléments calculée pour la matrice de corrélation R constitue uniquement les D premiers éléments de la dernière colonne de la matrice de corrélation R.

4.   Procédé selon la revendication 2, dans lequel :

    en cas de duplication des D derniers éléments du bloc de données utiles, la pluralité d'éléments calculée pour la matrice de corrélation R constitue uniquement la sous-matrice DxD inférieure gauche de la matrice de corrélation R, ou

    en cas de duplication des D premiers éléments du bloc de données utiles, la pluralité d'éléments calculée pour la matrice de corrélation R constitue uniquement la sous-matrice DxD supérieure droite de la matrice de corrélation R.

5.   Procédé selon l'une quelconque des revendications 1 à 4, dans lequel l'estimation de canal est exécutée d'une manière totalement aveugle, sans prise en compte du traitement des fréquences pilotes.

6.   Procédé selon l'une quelconque des revendications 1 à 4, dans lequel l'estimation de canal est exécutée d'une manière semi-aveugle, par utilisation, en outre, des fréquences pilotes pour l'exécution de l'estimation de canal.

7.   Appareil pour l'estimation d'un canal et l'exécution d'une égalisation dans un processus de modulation OFDM dans lequel un bloc de symboles reçu contient un préfixe redondant en plus des données utiles à envoyer, l'appareil comprenant :

    des moyens de détection et des moyens de stockage pour détecter et stocker un vecteur reçu comprenant le préfixe redondant ainsi que les données utiles ;

    et **caractérisé par** :

    des moyens de calcul (110) pour calculer une pluralité d'éléments d'une matrice de corrélation R du vecteur reçu ; et

    des moyens d'estimation (110) pour estimer les coefficients du canal dans le domaine temporel par l'une ou l'autre des opérations consistant à :

        i. normaliser au moins une colonne de la matrice de corrélation R ; et

        ii. exécuter une décomposition LU d'une sous-matrice de R en le produit d'une matrice triangulaire inférieure L et d'une matrice triangulaire supérieure U, où chaque matrice triangulaire individuelle a les mêmes éléments sur chacune de ses diagonales, et minimiser une mesure de distance entre au moins l'une des matrices L ou U et une matrice triangulaire obtenue à partir d'un vecteur des coefficients du canal.

8.   Appareil selon la revendication 7, dans lequel les moyens de calcul (110) sont conçus pour recevoir le préfixe redondant ainsi que la partie du bloc de symboles reçu qui correspond au préfixe redondant.

9.  Récepteur incorporant un appareil selon l'une ou l'autre des revendications 7 et 8.

**Patentansprüche**

1.  Verfahren zur Kanalabschätzung und Kanalentzerrung zur Verwendung in einem OFDM-Modulationsschema, in dem ein empfangenes Blocksymbol ein redundantes Präfix zusätzlich zu nützlichen zu sendenden Daten umfasst, wobei das Verfahren umfasst:

    auf der Übertragungsseite (1) wird das redundante Präfix, das D Elemente umfasst, zusätzlich zu dem nützlichen Datenblock gesendet; und
    auf der Empfängerseite (100) wird ein empfangener Vektor, der sowohl das redundante Präfix als auch den nützlichen Datenblock umfasst, detektiert und gespeichert,
    wobei das Verfahren **gekennzeichnet ist durch**:

    Berechnen einer Mehrzahl von Elementen einer Korrelationsmatrix R des empfangenen Vektors; und
    Abschätzen der Zeitdomänenkanalkoeffizienten **durch** entweder:

    i. Normalisieren mindestens einer Spalte der Korrelationsmatrix R; oder
    ii. Durchführen einer LU-Zerlegung einer Untermatrix von R in das Produkt einer unteren L- und oberen U-Dreiecksmatrix, wobei jede individuelle Dreiecksmatrix auf jeder ihrer Diagonalen über die selben Elemente verfügt; und
    Minimieren einer Abstandsmetrik zwischen L und/oder U und einer Dreiecksmatrix, die von einem Vektor der Kanalkoeffizienten abgeleitet wird.

2.  Verfahren gemäß Anspruch 1, wobei das redundante Präfix eine Kopie der D Elemente des nützlichen, an dem redundanten Präfix angrenzenden, Datenblocks umfasst.

3.  Verfahren gemäß Anspruch 2, wobei
    in dem Falle eines Duplizierens der letzten D Elemente des nützlichen Datenblocks die berechnete Mehrzahl von Elementen der Korrelationsmatrix R nur die letzten D Elemente der ersten Spalte der Korrelationsmatrix R umfasst, oder
    in dem Falle eines Duplizierens der ersten D Elemente des nützlichen Datenblocks die berechnete Mehrzahl von Elementen der Korrelationsmatrix R nur die ersten D Elemente der letzten Spalte der Korrelationsmatrix R umfasst.

4.  Verfahren gemäß Anspruch 2, wobei
    in dem Falle eines Duplizierens der letzten D Elemente des nützlichen Datenblocks die berechnete Mehrzahl von Elementen der Korrelationsmatrix R nur die untere linke DxD Untermatrix der Korrelationsmatrix R umfasst, oder
    in dem Falle eines Duplizierens der ersten D Elemente des nützlichen Datenblocks die berechnete Mehrzahl von Elementen der Korrelationsmatrix R nur die obere rechte DxD Untermatrix der Korrelationsmatrix R umfasst.

5.  Verfahren gemäß einem der Ansprüche 1 bis 4, wobei die Kanalabschätzung auf eine vollständig blinde Art und Weise durchgeführt wird, ohne auf die Verarbeitung von Pilottönen angewiesen zu sein.

6.  Verfahren gemäß einem der Ansprüche 1 bis 4, wobei die Kanalabschätzung auf eine halbblinde Art und Weise durchgeführt wird, wobei zusätzliche Pilottöne verwendet werden, um eine Kanalabschätzung durchzuführen.

7.  Vorrichtung zur Abschätzung eines Kanals und zum Durchführen einer Entzerrung in einem OFDM-Modulatiansschema, in dem ein empfangenes Blocksymbol zusätzlich zu zu sendenden nützlichen Daten ein redundantes Präfix umfasst, wobei die Vorrichtung umfasst:

    Detektionsmittel und Speichermittel zum Detektieren und Speichern eines empfangenen Vektors, der sowohl ein redundantes Präfix als auch nützliche Daten umfasst;
    und **gekennzeichnet durch**:

    Berechnungsmittel (110) zum Berechnen einer Mehrzahl von Elementen einer Korrelationsmatrix R des empfangenen Vektors; und

Abschätzmittel (110) zum Abschätzen der Zeitdomänenkanalkoeffizienten **durch** entweder:

i. Normalisieren mindestens einer Spalte der Korrelationsmatrix R; oder

ii. Durchführen einer LU-Zerlegung einer Untermatrix von R in das Produkt einer unteren L- und oberen U-Dreiecksmatrix, wobei jede individuelle Dreiecksmatrix auf jeder ihrer Diagonalen über die selben Elemente verfügt, und Minimieren einer Abstandsmetrik zwischen L und/oder U und einer Dreiecksmatrix, die von einem Vektor der Kanalkoeffizienten abgeleitet wird.

8. Vorrichtung gemäß Anspruch 7, wobei die Berechnungsmittel (110) geeignet sind, um sowohl das redundante Präfix als auch den Teil des empfangenen Blocksymbols, der dem redundanten Präfix entspricht, zu empfangen.

9. Empfänger, der eine Vorrichtung gemäß Anspruch 7 oder 8 umfasst.

*FIG. 1*

*FIG. 2*

EP 0 987 831 B1